# EUROPÄISCHE PATENTSCHRIFT

(11) **EP 0 952 068 B1**
(45) Veröffentlichungstag und Bekanntmachung des Hinweises auf die Patenterteilung: **31.03.2004**
(21) Anmeldenummer: 99105369.5
(22) Anmeldetag: 16.03.1999
(51) Int. Cl.: B62D 25/16

(54) **Radhausschale**
A wheel-arch cover panel
Panneau de couverture de garde-boue

(30) Priorität: 25.04.1998 DE 29807563 U
(43) Veröffentlichungstag der Anmeldung: 27.10.1999
(73) Patentinhaber: REHAU AG + Co, 95111 Rehau (DE)
(72) Erfinder: Stein, Helmut, 95111 Rehau (DE)

(56) Entgegenhaltungen:
- DE-A- 19 626 272
- DE-A- 19 718 946
- DE-A- 19 817 567
- DE-C- 19 548 728
- US-A- 5 000 483

## Beschreibung

Die Erfindung betrifft eine Radhausschale für die Radkästen von Kraftfahrzeugen bestehend aus einem thermoverformbaren oder spritzgegossenen Thermoplasten. Eine derartige Radhausschale ist aus der Patentschrift EP-A-0 810 145 bekannt.

Eine weitere Radhausschale ist, aus dem Gebrauchsmuster DE-U-295 08 736 bekannt. Radhausschalen mit diesem Aufbau sind technisch schwierig herzustellen, da das bekannte Spritzgußverfahren für derartige Bauteile nicht angewendet werden kann, weil mit diesem Verfahren das Vlies durch die auftretenden Spritzkräfte für den gedachten Einsatzzweck nicht mehr brauchbar wäre.

Aus der DE-A-33 43 402 ist eine Radhausschale aus Kunststoff bekannt geworden, welche in geräuschgedämmter Ausführungsform vorliegt. Es handelt sich hier um ein einteiliges, aus homogenem Polymermaterial bestehendes Teil mit besonders strukturierter Oberfläche. Das zur Herstellung verwendete Polymermaterial ist eine Mischung aus einem Polyolefin, aus einem Synthesekautschuk und einem amorphen Füllstoff. Die dem Rad zugewandte Oberfläche dieser Radhausschale ist zumindest in Teilbereichen mit Vertiefungen versehen, welche sphärisch ausgeformt sind. Diese Vertiefungen oder Aufrauhungen können sich über die gesamte Fläche des Radlaufteils erstrecken, sie können jedoch auch auf diejenigen Abschnitte des Radlaufteils beschränkt sein, bei denen beispielsweise eine hohe Aufprallenergie wirksam wird. Auf diese Weise kann aufprallendes Spritzwasser abgeführt oder die Energie von aufprallendem Steinschlag absorbiert werden. Die vollflächige Aufrauhung oder das mechanische Einbringen von Vertiefungen mit abwechselnden Erhöhungen ist jedoch ein aufwendiger Arbeitsvorgang, der sich in einem erhöhten Kostenfaktor nachteilig niederschlägt.

Hier setzt die Erfindung ein, die eine serienmäßig herstellbare Radhausschale betrifft, welche optimalen Schutz vor Steinschlag und Korrosion sowie eine merkliche Verminderung der Innengeräusche insbesondere bei einer Fahrt auf regennasser Fahrbahn bewirkt und außerdem kostengünstig herstellbar ist. Erfindungsgemäß wird dazu eine Radhausschale mit den Merkmalen des Anspruchs 1 vorgeschlagen.

Vorteilhafte Weiterbildungen der Erfindung sind in den abhängigen Ansprüchen 2 bis 8 definiert.

In der Zeichnung sind vorteilhafte Ausführungsformen der Erfindung schematisch dargestellt; es zeigt
Figur 1 den angeordneten Teilbereich eines Kraftfahrzeugs im Schnitt mit einer im Radkasten angeordneten Radhausschale.
Figur 2 die vergrößerte Anordnung der Radhausschale im Radkasten.
Figur 3 die Radhausschale in Seitenansicht und im Schnitt.

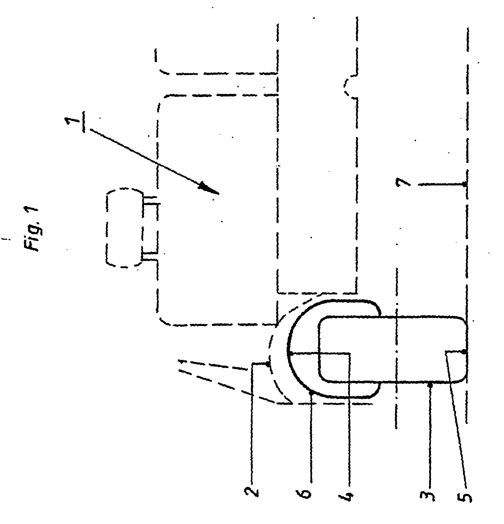

Figur 1 zeigt den angedeuteten Teilbereich eines Kraftfahrzeugs (1) im Schnitt, dessen Innenraum gegenüber Geräuschentwicklung von außen geschützt werden soll. Das Kraftfahrzeug (1) weist einen Radkasten (2) auf, in dem ein Rad (3) angeordnet ist. In dem Radkasten (2) ist eine Radhausschale (4) aus Kunststoff vorgesehen. Die Radhausschale (4) ist an dem Radkasten (2) bzw. an dessen Flanschbereich (6) in bekannter Weise befestigt Das Rad (3) steht mit seiner Lauffläche (5) auf dem Boden (7) auf.

Derartige Radhausschalen dienten im Stand der Technik ausschließlich zur Vermeidung von Steinschlagschäden und zum Schutz gegen Korrosion an der Karosserie. Die Radhausschale der Erfindung ermöglicht es, durch Schaumstoffbeschichtung auf kostengünstige Trägermaterialien spürbare Verminderung der Innengeräusche bei Fahrt auf regennasser Fahrbahn bzw. bei Steinschlag zu erreichen.

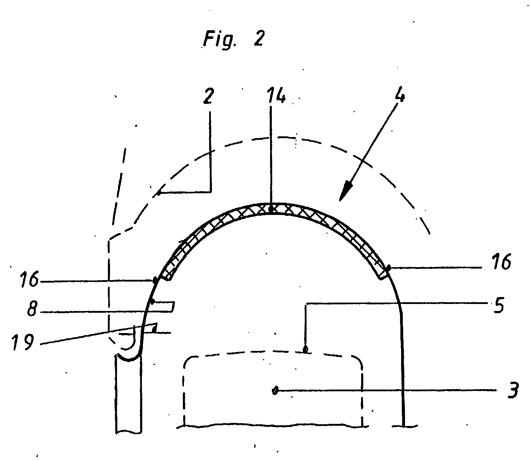

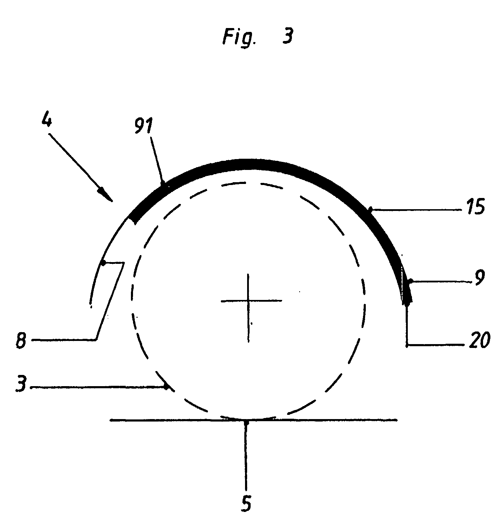

Figur 2 zeigt in vergrößerter Ausführungsform den der Lauffläche (5) des Rades (3) gegenüberliegenden Abschnitt der Radhausschale (4). In der gezeigten Darstellung weist die dem Rad (3) zugewandte Oberfläche (8) der Radhausschale (4) einen mit Schaumstoff beschichteten Bereich (14) auf. Dieser Bereich (14) ist vorzugsweise auf diejenigen Abschnitte der Radhausschale (4) beschränkt, bei denen eine hohe Aufprallenergie wirksam wird. Insbesondere weist der hintere Abschnitt (9, Figur 3) des Bereiches (14) wenigstens bis zu dem der Lauffläche (5) gegenüberliegenden Abschnitt des Bereiches (14) die erfindungsgemäße Beschichtung auf.

Figur 3 zeigt das angedeutete Rad (3) und die angedeutete Oberfläche (8) der Radhausschale (4) mit der erfindungsgemäßen Beschichtung (15). Hier ist der hintere Abschnitt (9) der Beschichtung (15) und deren vorderer Abschnitt (91) in verdickter Form ausgebildet. Auf diese Weise kann die akustische Wirkung der erfindungsgemäßen Beschichtung (14, 15) noch vergrößert werden.

Zur Verbesserung dieses akustischen Verhaltens trägt auch eine elastische Verbindung oder Ankopplung der Radhausschale (4) mit dem bzw. an den Radkasten (2) bzw. dessen Flanschbereich (6) bei. Diese besondere Verbindung kann beispielsweise durch eine klipartige Umgreifung des dem Flanschbereich (6) zugewandten Randes der Radhausschale (4) erreicht werden. Auch sind hier besondere Befestigungselemente (19) einsetzbar, die beispielsweise Schraubverbindungen sein können.

## Patentansprüche

1. Radhausschale für die Radkästen von Kraftfahrzeugen bestehend aus einem thermoverformbaren oder spritzgegossenen Thermoplasten, **dadurch gekennzeichnet, dass** der tragende Bereich der Radhausschale (4) auf einem dem Rad (3) zugewandten Oberflächenbereich der Radhausschale (4) vollflächig oder in gezielten Teilbereichen mit einer geräuschmindemden Schaumstoffbeschichtung (14,15) versehen ist.

2. Radhausschale nach Anspruch 1 , **dadurch gekennzeichnet, dass** die geräuschmindernde Schaumstoffbeschichtung (14,15) körperschalldämmend ausgestaltet ist.

3. Radhausschale nach Ansprüchen 1 bis 2, **dadurch gekennzeichnet, dass** die geräuschmindernde Schaumstoffbeschichtung (14,15) mehrschichtig aufgebaut ist.

4. Radhausschale nach Ansprüchen 1 bis 3, **dadurch gekennzeichnet, dass** die geräuschmindemde Schaumstoffbeschichtung (14,15) im in Fahrtrichtung hinteren Abschnitt (9) der Radhausschale vorgesehen ist.

5. Radhausschale nach Ansprüchen 1 bis 4, **dadurch gekennzeichnet, dass** die geräuschmindemde Schaumstoffbeschichtung (14,15) in dem Abschnitt der Radhausschale (4) vorgesehen ist, der dem Bereich der Lauffläche (5) des Rades (3) gegenüberliegt.

6. Radhausschale nach Ansprüchen 1 bis 5, **dadurch gekennzeichnet, dass** die geräuschmindemde Schaumstoffbeschichtung (14,15) auf die zugeordneten Oberflächenbereiche der Radhausschale (4) aufgeschweißt, aufgeklebt oder mechanisch an diese Bereiche angebunden ist.

7. Radhausschale nach Anspruch 1, **dadurch gekennzeichnet, dass** der tragende Bereich der Radhausschale aus einem elastomermodifizierten Thermoplasten besteht.

8. Radhausschale nach Anspruch 1, **dadurch gekennzeichnet, dass** der tragende Bereich der Radhausschale aus einer HDPE/LDPE-Mischung besteht.

## Claims

1. Wheel-arch cover panel for the wheel arches of motor vehicles, consisting of a thermoformable or injection moulded thermoplastic, **characterised in that** the supporting part of the wheel-arch cover panel (4) is provided with a noise-reducing foamed material coating (14, 15) covering the full surface or specific areas of the surface of a portion of the wheel-arch cover panel (4) that faces the wheel (3).

2. Wheel-arch cover panel according to claim 1, **characterised in that** the noise-reducing foamed material coating (14, 15) has structure-borne noise insulation properties.

3. Wheel-arch cover panel according to claims 1 and 2, **characterised in that** the noise-reducing foamed material coating (14, 15) is built up with multiple layers.

4. Wheel-arch cover panel according to claims 1 to 3, **characterised in that** the noise-reducing foamed material coating (14, 15) is provided in the rear section (9) of the wheel-arch cover panel in the direction of travel.

5. Wheel-arch cover panel according to claims 1 to 4, **characterised in that** the noise-reducing foamed material coating (14, 15) is provided in the section of the wheel-arch cover panel (4) that faces the tread form (5) of the wheel (3).

6. Wheel-arch cover panel according to claims 1 to 5, **characterised in that** the noise-reducing foamed material coating (14, 15) is welded, bonded or mechanically fixed to the assigned surface portions of the wheel-arch cover panel (4).

7. Wheel-arch cover panel according to claim 1, **characterised in that** the supporting part of the wheel-arch cover panel is composed of an elastomer-modified thermoplastic.

8. Wheel-arch cover panel according to claim 1, **characterised in that** the supporting part of the wheel-arch cover panel is composed of a mixture of HDPE/LDPE.

## Revendications

1. Panneau de couverture de garde-boue pour les passages de roue des véhicules, réalisé en thermoplastique thermoformé ou injecté, **caractérisé en ce que** la face fonctionnelle du panneau de couverture de garde-boue (4), est pourvue d'un revêtement mousse (14,15) formant une isolation acoustique, sur toute la surface ou dans des zones ciblées de la surface faisant face à la roue (3)

2. Panneau de couverture de garde-boue selon revendication 1, **caractérisé en ce que** le revêtement mousse (14,15) formant une isolation acoustique est conçu pour atténuer les bruits d'impacts.

3. Panneau de couverture de garde-boue selon revendication 1 à 2, **caractérisé en ce que** le revêtement mousse (14,15) formant une isolation acoustique est composé de plusieurs couches.

4. Panneau de couverture de garde-boue selon revendication 1 à 3, **caractérisé en ce que** le revêtement mousse (14,15) formant une isolation acoustique est placé dans la partie arrière (9) du passage de roue, dans le sens de la marche.

5. Panneau de couverture de garde-boue selon revendication 1 à 4, **caractérisé en ce que** le revêtement mousse (14,15) formant une isolation acoustique, est prévu sur la partie du panneau de couverture de garde-boue (4) faisant face à la zone de la bande de roulement (5) de la roue.

6. Panneau de couverture de garde-boue selon revendication 1 à 5, **caractérisé en ce que** le revêtement mousse (14,15) formant une isolation acoustique est appliqué par soudure, collage ou mécaniquement sur les zones de la surface du panneau de couverture de garde-boue (4) qui lui sont affectées.

7. Panneau de couverture de garde-boue selon revendication 1, **caractérisé en ce que** la face fonctionnelle du panneau de couverture de garde-boue est constituée d'un thermoplastique modifié élastomère .

8. Panneau de couverture de garde-boue selon revendication 1, **caractérisé en ce que** la face fonctionnelle du panneau de couverture de garde-boue est constituée d'un mélange HDPE/LDPE.
